# EUROPEAN PATENT APPLICATION

(11) **EP 1 619 575 A1**
(43) Date of publication of application: **25.01.2006**
(21) Application number: 04017555.6
(22) Date of filing: 23.07.2004
(51) Int. Cl.: G06F 1/16

(54) **Notebook suitable for display panels of different sizes**

(71) Applicant: VAC Corporation, Taipei (TW)
(72) Inventor: Ling, Alex, Taipei (TW)
(74) Representative: Viering, Jentschura & Partner

(57) **Abstract**

A notebook suitable for display panels of different sizes has a main body and a display apparatus. The display apparatus includes a supporting unit, a holding assembly, and a display panel. The supporting unit is pivotly connected with the main body. The supporting unit has a receiving space formed therein and a first fastening structure. The holding assembly is assembled on the first fastening structure to decrease the receiving space. The holding assembly has a second fastening structure. The display panel is assembled on the second fastening structure and disposed in the receiving space. Thereby, the first fastening structure of the supporting unit can be assembled with a larger display panel or the holding assembly, and the second fastening structure of the holding assembly can be assembled with a smaller display panel.

## Description

### BACKGROUND OF THE INVENTION

### 1. Field of the Invention

The present invention relates to a notebook suitable for display panels of different sizes, and more particularly, to a notebook that has a display panel assembled therewith in accordance with a demand for a size of the display panel.

### 2. Background of the Invention

It is well known that because of the improvement of the manufacturing technology and the rationality of the price, notebooks have gradually replaced desktops and become main products in the computer market. Manufacturers have to diversify their products to satisfy demands from different consumers. In addition, the manufacturers have to improve their manufacturing efficiency, so as to decrease manufacturing costs and to increase competitive ability of their products.

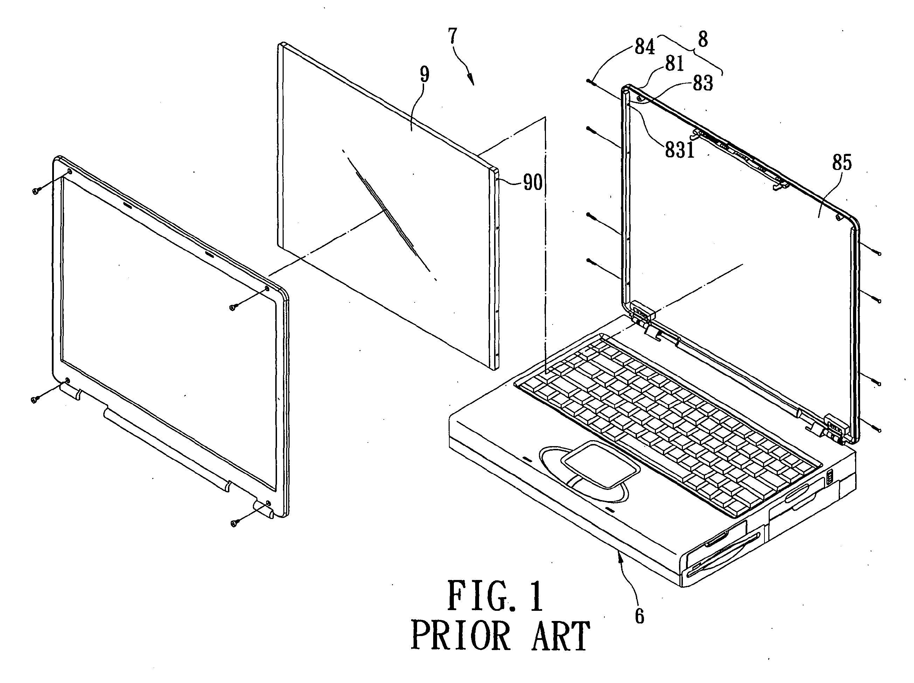

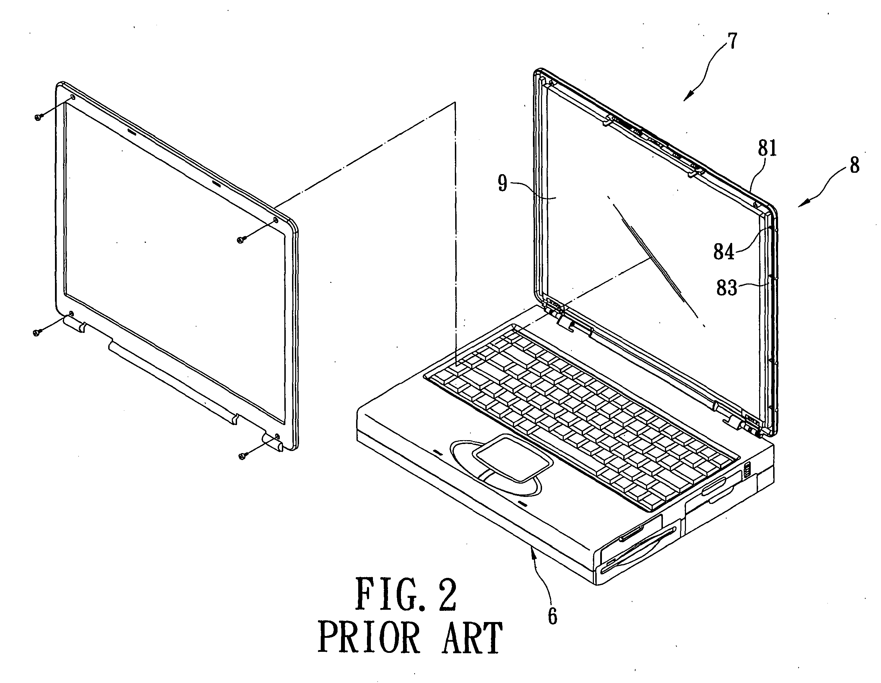

Referring to Fig. 1 and Fig. 2, a conventional notebook includes a main body 6 and a display apparatus 7. The display apparatus 7 includes a supporting unit 8 and a display panel 9. The supporting unit 8 is pivotly connected with the main body 6. The supporting unit 8 includes an outer shell 81, a pair of reinforcement elements 83, and a plurality of fastening elements 84. The outer shell 81 of the supporting unit 8 has a receiving space 85 formed therein. The reinforcement elements 83 are fixed on two opposing edges of the outer shell 81, respectively. Each of the -reinforcement elements 83 has a plurality of through holes 831 therein. The display panel 9 has a plurality of fastening members 90 disposed on two opposing edges thereof. The fastening elements 84 penetrate through the through holes 831 of the reinforcement elements 83 and secure at the fastening members 90 of the display panel 9, respectively, so that the display panel 9 is disposed in the receiving space 85.

According to the above conventional notebook, the supporting unit 8 can be assembled with the display panel 9 with only one size (such as a 15-inch size). Because notebooks having same equipment fail-to have display panels of different sizes, respectively, the demands from different consumers are not satisfied. The manufacturers have to increase their design and manufacturing costs to develop more models of notebooks, and the sellers have to increase their stock costs.

Accordingly, as discussed above, the conventional notebook still has some drawbacks that could be improved. The present invention aims to resolve the drawbacks in the prior art.

### SUMMARY OF INVENTION

The primary object of the invention is therefore to specify a notebook suitable for display panels of different sizes, whereby display panels of different sizes are easily installed on notebooks having the same equipment, so as to provide more options to consumers and to decrease manufacturing costs.

According to the invention, the object is achieved via a notebook suitable for display panels of different sizes, comprising a main body and a display apparatus. The display apparatus includes a supporting unit, a holding assembly, and a display panel. The supporting unit is pivotly connected with the main body. The supporting unit has a receiving space formed therein and a first fastening structure. The holding assembly is assembled on the first fastening structure to decrease the receiving space. The holding assembly has a second fastening structure. The display panel is assembled on the second fastening structure and disposed in the receiving space.

The first fastening structure of the supporting unit can be assembled with a larger display panel or the holding assembly, and the second fastening structure of the holding assembly can be assembled with a smaller display panel.

To provide a further understanding of the invention, the following detailed description illustrates embodiments and examples of the invention. Examples of the more important features of the invention thus have been summarized rather broadly in order that the detailed description thereof that follows may be better understood, and in order that the contributions to the art may be appreciated. There are, of course, additional features of the invention which will be described hereinafter and which will form the subject of the claims appended hereto.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
FIG. 1 is an exploded perspective view of a notebook of the prior art;
FIG. 2 is a partial perspective assembly view of a notebook of the prior art;
FIG. 3 is an exploded perspective view of a first embodiment of a notebook of the present invention;
FIG. 4 is a partial perspective assembly view of a first embodiment of a notebook of the present invention;
FIG. 5 is a perspective schematic view of a holding assembly of the present invention;
FIG. 6 is an exploded perspective view of a second embodiment of a notebook of the present invention; and
FIG. 7 is a partial perspective assembly view of a second embodiment of a notebook of the present invention.

### DETAILED DESCRIPTION OF THE EMBODIMENTS

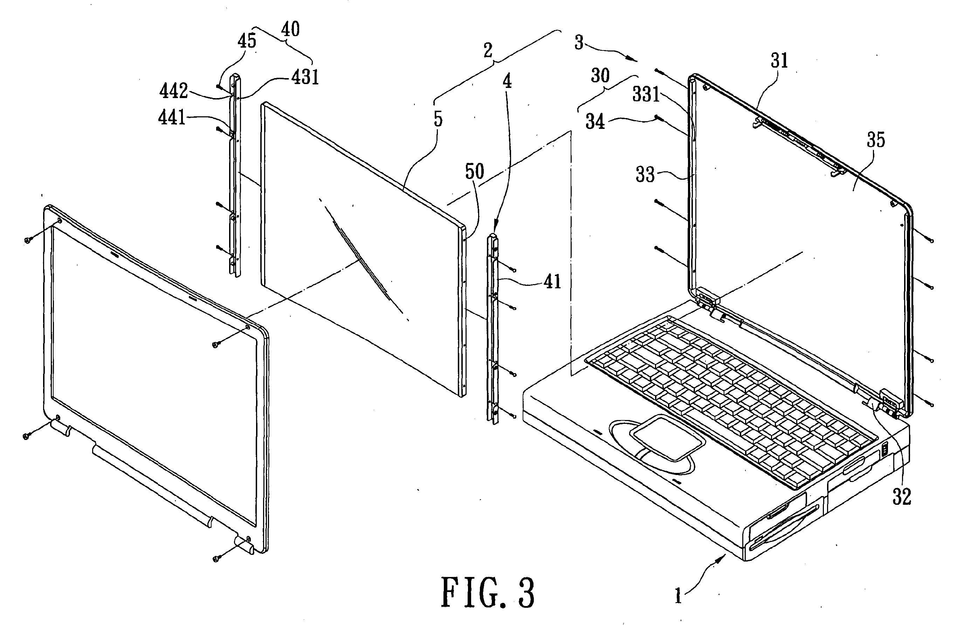

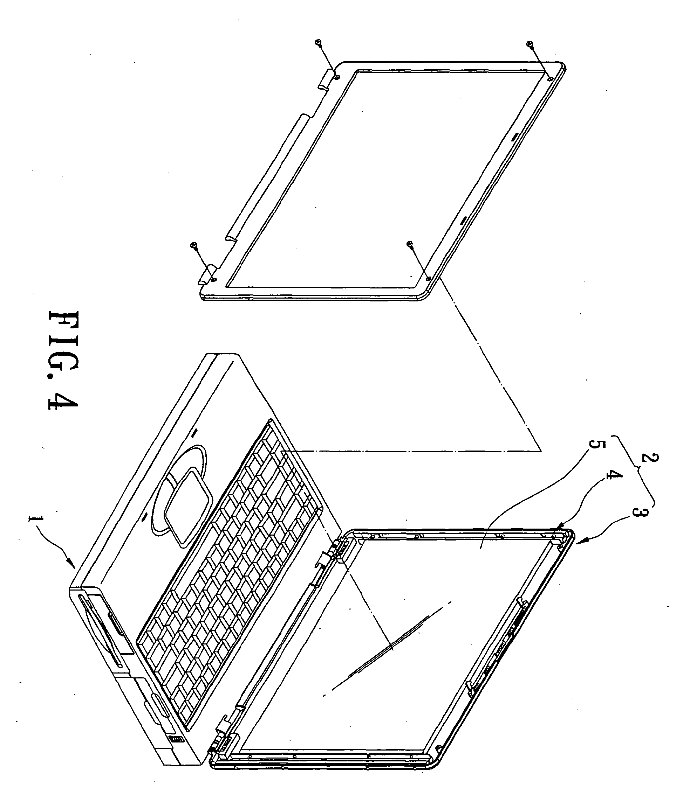

Reference is made to Fig. 3 and Fig. 4, which illustrate a first embodiment of the present invention. The present invention provides a notebook suitable for display panels of different sizes. The notebook comprises a main body 1 and a display apparatus 2.

The display apparatus 2 includes a supporting unit 3, a holding assembly 4, and a display panel 5. The supporting unit 3 is pivotly connected with the main body 1. The supporting unit 3 has a receiving space 35 formed therein and a first fastening structure 30 disposed on two opposing edges thereof. The holding assembly 4 is assembled on the first fastening structure 30 to decrease the receiving space 35. The holding assembly 4-has a second fastening structure 40. The display panel 5 is assembled on the second fastening structure 40 and disposed in the receiving space 35.

In the first embodiment, the supporting unit 3 includes an outer shell 3.1, a pair of pivot assemblies 32, a pair of reinforcement elements 33; and a plurality of first fastening elements 34 (such as screws). The outer shell 31 forms the receiving space 35 therein. Each of the pivot assemblies 32 has two ends fixed on the outer shell 31 and the main body 1, respectively, so that the outer shell 31 is pivotly connected with the main body 1. The reinforcement elements 33 are fixed on the outer shell 31 at two opposing edges thereof, respectively. Each of the reinforcement elements 33 has a plurality of first through holes 331. The first fastening structure includes the first through holes 331 and the first fastening elements 34.

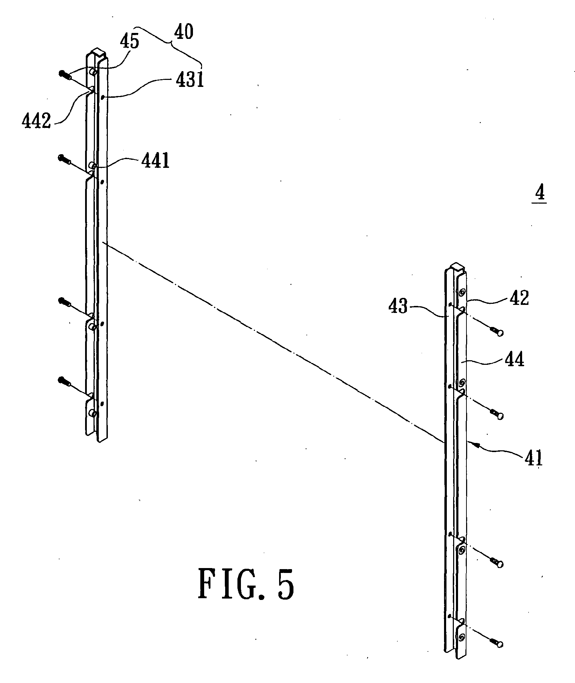

Referring to Fig. 5, the holding assembly 4 includes a pair of holders 41 and a plurality of second fastening elements 45 (such as screws). Each of the holders 41 is in a long strip shape and has a base portion 42, an inner portion 43, and an outer portion 44. The inner portion 43 and the outer portion 44 extend vertically from two opposing edges of the base portion 42, respectively. The inner portion 43 has a plurality of second through holes 431, and the outer portion 44 has a plurality of first fastening members 441 (such as thread bases) and a plurality of cutouts 442 corresponding to the second through holes 431 of the inner portion 43, respectively. The second fastening structure 40 includes the second through holes 431 and the second fastening elements 45.

Referring to Fig. 3 and Fig. 4, and also Fig. 1 and Fig. 2, when the holding assembly 4 is not assembled on the supporting unit 3, the first fastening elements 34 penetrate through the first through holes 331 of the reinforcement elements 33 of the supporting unit 3 and secure at the fastening members 90 of the display panel 9, respectively, so that a larger display panel 9 (such as a 15-inch size) is able to be assembled on the first fastening structure 30 of the supporting unit 3.

Referring to Fig. 3 to Fig. 5, the smaller display panel 5 (such as a 14-inch size) has a plurality of second fastening members 50 (such as thread bases) disposed on two opposing edges thereof. The second fastening elements 45 penetrate through the second through holes 431 via the cutouts 442 of the holders 41 and secure at the second fastening members 50, respectively, so that the inner portion 43 of each of the holders 41 is against the display panel 5. The first fastening elements 34 penetrate through the first through holes 331 of the reinforcement elements 33 of the supporting unit 3 and secure at the first fastening members 441 of the holders 41, respectively, so that the outer portion 44 of each of the holders 41 is against each of the reinforcement elements 33 on the outer shell 31, respectively.

The first fastening structure 30 of the supporting unit 3 can be assembled with,the display panel 9 (See Fig. 1 and Fig. 2) with a larger size or the holding assembly 4, and the second fastening structure 40 of the holding assembly 4 can be assembled with the display panel 5 with a smaller size. Therefore, the assembly and disassembly of display panels are easier and do not interfere with other components. The manufacturers or the sellers can assemble display panels of different sizes on notebooks having the same equipment to provide more models of notebooks to satisfy the demands from different consumers.

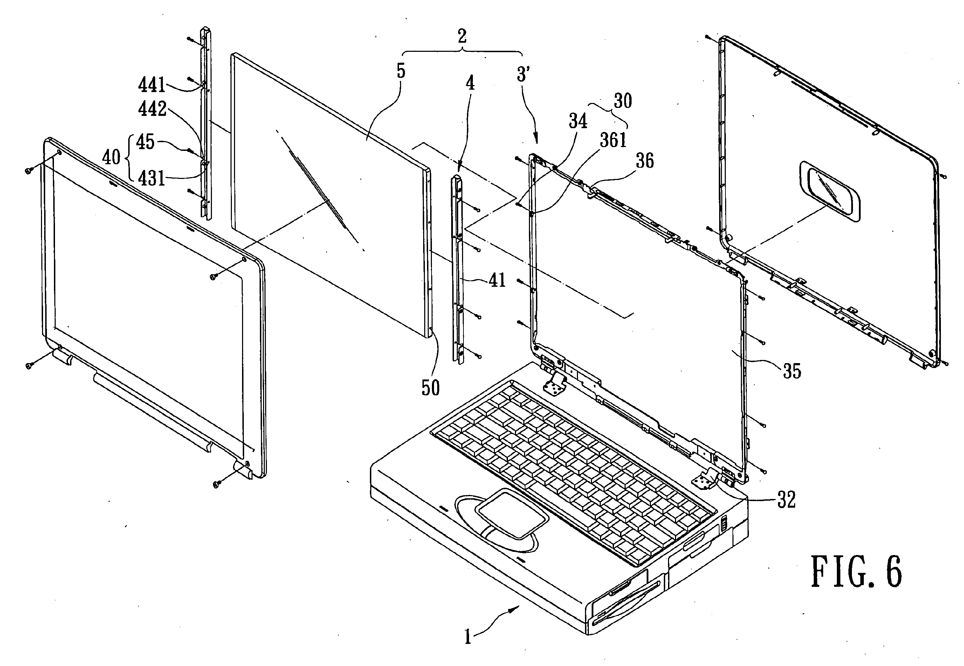

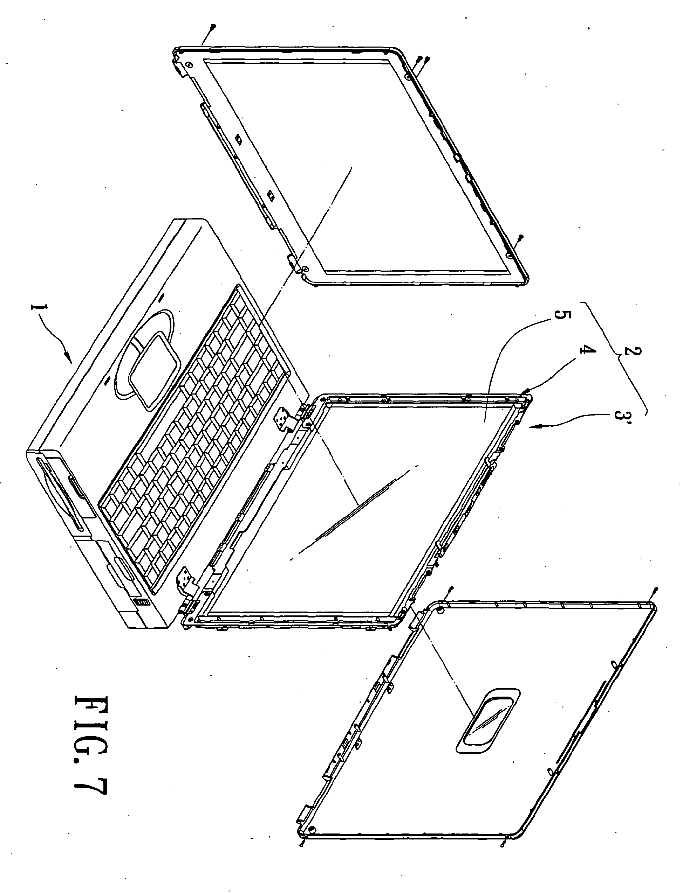

Reference is made to Fig. 6 and Fig. 7, which illustrate a second embodiment of the present invention. The supporting unit 3' includes a frame 36, a pair of pivot assemblies 32, and a plurality of first fastening elements 34. The frame 36 forms the receiving space 35 therein. Each of the pivot assemblies 32 has two ends fixed on the frame 36 and the main body 1, respectively, so that the frame 36 is pivotly connected with the main body 1. The frame 36 has a plurality of first through holes 361 disposed in two opposing edges thereof. The first fastening structure 30 includes the first through holes 361 and the first fastening elements 34. Reference is also made to Fig. 5, in which the second fastening elements 45 penetrate through the second through holes 431 via the cutouts 442 of the holders 41 and secure at the second fastening members 50, respectively, so that the inner portion 43 of each of the holders 41 is against the display panel 5. The first fastening elements 34 penetrate through the first through holes 361 of the frame 36 of the supporting unit 3 and secure at the first fastening members 441 of the holders 41, respectively, so that the outer portion 44 of each of the holders 41 is against the frame 36. Display panels of different sizes are thereby easily assembled on or disassembled from notebooks.

As indicated above, the notebook suitable for display panels of different sizes of the present invention has the following advantages:
(1) The first fastening structure of the supporting unit can be assembled with a larger display panel or the holding assembly, and the holding assembly can be assembled with a smaller display panel, so that display panels of different sizes are easily assembled on notebooks having the same equipment, and the design, the manufacturing, and the stock costs thereof can be decreased.
(2) With the help of the holding assembly, notebooks having the same equipment can have display panels of different sizes, so that the manufacturers can provide more models of notebooks to satisfy the demands from different consumers.

It should be apparent to those skilled in the art that the above description is only illustrative of specific embodiments and examples of the invention. The invention should therefore cover various modifications and variations made to the herein-described structure and operations of the invention, provided they fall within the scope of the invention as defined in the following appended claims.

## Claims

1. A notebook suitable for display panels of different sizes; comprising:
a main body; and
a display apparatus including a supporting unit, a holding assembly, and a display panel, the supporting unit being pivotly connected with the main body, the supporting unit having a receiving space formed therein and a first fastening structure, the holding assembly being assembled on the first fastening structure to decrease the receiving space, the holding assembly having a second fastening structure, and the display panel being assembled on the second fastening structure and disposed in the receiving space.

2. The notebook as claimed in claim 1, wherein the supporting unit includes an outer shell, a pair of reinforcement elements, and a plurality of first fastening elements, the outer shell being pivotly connected with the main body, the reinforcement elements being fixed on the outer shell, each of the reinforcement elements having a plurality of first through holes, the first fastening structure including the first through holes and the first fastening elements, the holding assembly including a pair of holders, each of the holders having a plurality of first fastening members, and the first fastening elements penetrating through the first through holes and securing at the first fastening members, respectively.

3. The notebook as claimed in claim 2, wherein the holding assembly includes a plurality of second fastening elements, and each of the holders has a base portion, an inner portion, and an outer portion, the inner portion and the outer portion extending vertically from two opposing edges of the base portion, respectively, the inner portion having a plurality of second through holes, the outer portion having a plurality of first fastening members and a plurality of cutouts corresponding to the second through holes of the inner portion, respectively, and the second fastening structure including the second through holes and the second fastening elements.

4. The notebook as claimed in claim 1, wherein the supporting unit includes a frame and a plurality of first fastening elements, the frame being pivotly connected with the main body, the frame having a plurality of first through holes, the first fastening structure including the first through holes and the first fastening elements, the holding assembly including a pair of holders, each of the holders having a plurality of first fastening members, and the first fastening elements penetrating through the first through holes and securing at the first fastening members, respectively.

5. The notebook as claimed in claim 4, wherein the holding assembly includes a plurality of second fastening elements, and each of the holders has a base portion, an inner portion, and an outer portion, the inner portion and the outer portion extending vertically from two opposing edges of the base portion, respectively, the inner portion having a plurality of second through holes, the outer portiori having a plurality of first fastening members and a plurality of cutouts corresponding to the second through holes of the inner portion, respectively, and the second fastening structure including the second through holes and the second fastening elements.

6. The notebook as claimed in claim 1, wherein the holding assembly includes a pair of holders and a plurality of second fastening elements, each of the holders has a plurality of second through holes, the second fastening structure including the second through holes and the second fastening elements, the display panel having a plurality of second fastening members, and the second fastening elements penetrating through the second through holes and securing at the second fastening members, respectively.
